# EUROPÄISCHE PATENTSCHRIFT

(11) **EP 3 213 913 B1**
(45) Veröffentlichungstag und Bekanntmachung des Hinweises auf die Patenterteilung: **15.07.2020**
(21) Anmeldenummer: 17020076.0
(22) Anmeldetag: 28.02.2017
(51) Int. Cl.: B32B 15/085, A47K 3/28, A47K 3/40, B32B 15/095, B32B 15/20

(54) **DUSCHBODEN UND DUSCHBODENAUFBAU**
SHOWER BOTTOM AND SHOWER BOTTOM STRUCTURE
BAC À DOUCHE ET INSTALLATION DE BAC À DOUCHE

(30) Priorität: 03.03.2016 DE 202016001389 U; 07.03.2016 DE 202016001415 U; 08.03.2016 DE 202016001469 U; 13.04.2016 DE 202016002387 U
(43) Veröffentlichungstag der Anmeldung: 06.09.2017
(73) Patentinhaber: Schulte Duschkabinenbau GmbH & Co. KG, 59846 Sundern-Hachen (DE)
(72) Erfinder: NÜCKEL, Dirk, 69846 Sundern (DE)
(74) Vertreter: Von Rohr Patentanwälte Partnerschaft mbB

(56) Entgegenhaltungen:
- EP-A2- 1 857 266
- DE-A1- 2 336 525
- DE-A1- 4 330 373
- DE-A1- 19 754 355
- DE-U1-202011 051 228
- US-A1- 2004 105 966

## Beschreibung

Die vorliegende Erfindung betrifft einen Duschbodenaufbau gemäß dem Oberbegriff des Anspruchs 1 und eine Verwendung des Duschbodenaufbaus.

Aus der DE 101 31 338 A1 ist ein üblicher Duschbodenaufbau bekannt. Ein derartiger Duschbodenaufbau weist einen Träger aus Hartschaumstoff auf, wobei dieser vor Ort mit einer Mörtelschicht und einer Dichtmasse überzogen wird. Nach dem Aushärten kann anschließend ein Fliesenbelag verlegt werden. Die Montage, insbesondere das Fliesenverlegen, ist jedoch sehr zeitaufwendig und entsprechend mit hohen Kosten verbunden.

Die EP 1 857 266 A2 offenbart eine Duschkabine mit einer mehrschichtigen Platte. Die Platte ist an einer Wand der Duschkabine angeordnet und duschraumseitig auf ihrer Oberfläche bedruckt oder mit Mosaiksteinchen besetzt. Auch ein Duschboden der Duschkabine kann mit Mosaiksteinchen besetzt sein.

Die US 2004/0105966 A1 offenbart Keramikprodukte, beispielsweise Duschböden, die mit einer Oberflächenstruktur versehen sind um so eine Anti-Rutsch-Oberfläche zu bilden. Bei der Herstellung werden auf den Keramikprodukten oberflächenstrukturierte Bilder aufgebracht, die sich beim Brennen der Keramikprodukte mit diesen verbinden.

Die DE 23 36 525 A1 offenbart ein Verfahren und einen Strukturlack zum Erzeugen von Lacküberzügen mit strukturierter Oberfläche. Der Strukturlack ist transparent und wird als letzte Lackschicht auf einer Oberfläche aufgebracht.

Die DE 20 2011 051 228 U1 offenbart eine Sanitäreinrichtung, insbesondere eine Dusche oder Nasszelle, mit einem Schichtverbund für den Bodeneinbau. Der Schichtverbund umfasst als Schichten eine Trägerplatte und eine Schallschutzmatte, die flächig mit der Trägerplatte verbunden ist. Zusätzlich kann der Schichtverbund eine wasserabweisende Schicht aufweisen, die entweder als direkt wasserführende Oberschicht ausgeführt ist oder die als wasserabweisende Schicht zum Belegen mit Fliesen oder Platten ausgeführt ist.

Die DE 43 30 373 A1 und die DE 197 54 355 A1 betreffen Aufbauten für Wannen mit aus Schaumstoff hergestellten Wannenträgern. Die Träger sind dazu ausgebildet, einschichtige Wannenböden zu tragen.

Der vorliegenden Erfindung liegt die Aufgabe zugrunde, einen verbesserten Duschbodenaufbau anzugeben, vorzugsweise wodurch eine einfache, schnelle und/oder kostengünstige Montage ermöglicht oder unterstützt wird.

Die obige Aufgabe wird durch einen Duschbodenaufbau gemäß Anspruch 1 oder eine Verwendung gemäß Anspruch 15 gelöst. Vorteilhafte Weiterbildungen sind Gegenstand der Unteransprüche.

Der vorschlagsgemäße Duschbodenaufbau weist einen insbesondere plattenförmigen Träger und einen insbesondere einteiligen Duschboden bzw. eine insbesondere einteilige Duschtasse auf, vorzugsweise wobei der Duschboden im Einbauzustand auf dem Träger bzw. oberhalb des Trägers angeordnet ist.

Ein Aspekt der vorliegenden Erfindung liegt darin, dass der Duschboden aus einem Verbundwerkstoff, insbesondere einem Schichtverbundwerkstoff bzw. Laminat, hergestellt ist.

Der Duschboden weist eine erste, untere Schicht aus Kunststoff, insbesondere Polyethylen oder Polyurethan, und eine zweite, obere Schicht aus Metall, insbesondere Aluminium, auf. Dies ermöglicht eine besonders leichte, stabile und/oder kostengünstige Konstruktionsweise.

Gemäß einem weiteren Aspekt der vorliegenden Erfindung weist der Duschboden eine dritte Schicht aus Metall, insbesondere Aluminium, auf, vorzugsweise wobei die erste Schicht zwischen der zweiten und dritten Schicht angeordnet ist. Auf diese Weise wird eine besonders stabile bzw. biegesteife Bauweise ermöglicht oder unterstützt.

Der Duschbodenaufbau bzw. Duschboden bildet eine Baueinheit und/oder ist als eine bereits werkseitig vormontierte Baueinheit einbaubar. In vorteilhafter Weise wird so eine einfache, schnelle und kostengünstige Montage vor Ort ermöglicht oder unterstützt.

Gemäß einem weiteren Aspekt der vorliegenden Erfindung ist der Duschboden, insbesondere die zweite Schicht, zumindest auf der Oberseite bzw. einer im Einbauzustand einem Duschraum zugewandten Seite oberflächenbehandelt, vorzugsweise bedruckt und/oder lackiert, insbesondere strukturlackiert, und/oder rutschhemmend ausgebildet. In vorteilhafter Weise wird so die Belastbarkeit bzw. Lebensdauer des Duschbodens erhöht und/oder das Risiko des Ausrutschens reduziert.

Der Träger des Duschbodenaufbaus ist aus Kunststoff, insbesondere Hartschaumstoff, wie Polystyrol, hergestellt. Auf diese Weise wird eine besonders leichte Bauweise ermöglicht.

Gemäß einem weiteren Aspekt der vorliegenden Erfindung ist - zumindest randseitig bzw. im Randbereich - zwischen dem Träger und dem Duschboden eine insbesondere flächige Dichtung, besonders bevorzugt eine wasserundurchlässige Folie, angeordnet. In vorteilhafter Weise wird so eine zuverlässige bodenseitige Abdichtung des Duschbodens ermöglicht.

Gemäß einem weiteren Aspekt der vorliegenden Erfindung wird ein Schichtverbundwerkstoff mit einer ersten Schicht aus Kunststoff, insbesondere Polyethylen oder Polyurethan, und einer zweiten Schicht aus Metall, insbesondere Aluminium, als Duschboden verwendet, vorzugsweise wobei der Duschboden mit einem flächigen Träger aus Kunststoff, insbesondere Hartschaumstoff, stoffschlüssig, insbesondere durch Verkleben, verbunden wird. Optional wird zwischen der ersten Schicht und dem Träger eine dritte Schicht aus Kunststoff, insbesondere Polyethylen oder Polyurethan, und/oder eine flächige Dichtung, insbesondere eine wasserundurchlässige Folie, vorgesehen. Auf diese Weise können entsprechende Vorteile realisiert werden.

Die genannten Aspekte und Merkmale der vorliegenden Erfindung sowie die sich aus den Ansprüchen und der nachfolgenden Beschreibung ergebenen Aspekte und Merkmale der vorliegenden Erfindung können grundsätzlich unabhängig voneinander, aber auch in beliebiger Kombination realisiert werden.

Weitere Aspekte, Vorteile, Merkmale und Eigenschaften der vorliegenden Erfindung ergeben sich aus den Ansprüchen und der nachfolgenden Beschreibung bevorzugter Ausführungsformen anhand der Zeichnung. Es zeigt:
- Fig. 1: eine Draufsicht auf einen vorschlagsgemäßen Duschbodenaufbau gemäß einer ersten Ausführungsform;
- Fig. 2: einen schematischen Schnitt des Duschbodenaufbaus gemäß Fig. 1;
- Fig. 3: einen schematischen Schnitt eines vorschlagsgemäßen Duschbodens; und
- Fig. 4: einen schematischen Schnitt eines vorschlagsgemäßen Duschbodenaufbaus gemäß einer zweiten Ausführungsform.

In den teilweise nicht maßstabsgerechten, nur schematischen Figuren werden für gleiche oder gleichartige Bauteile und Komponenten dieselben Bezugszeichen verwendet, wobei sich entsprechende Eigenschaften und Vorteile ergeben, auch wenn eine wiederholte Beschreibung weggelassen ist.

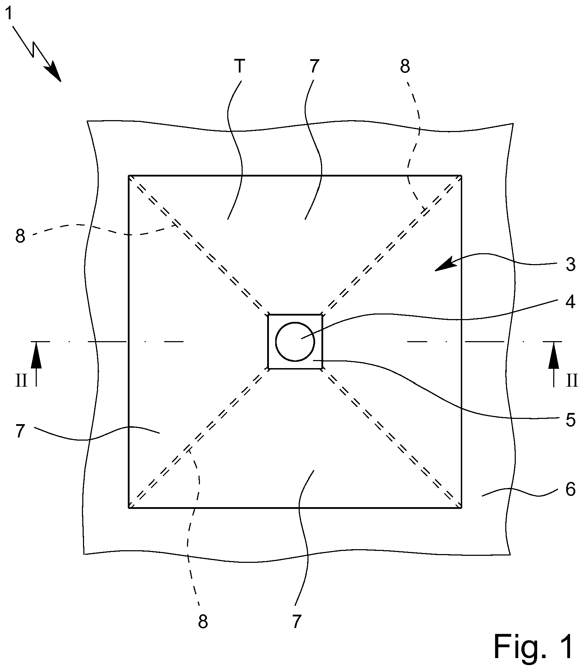

Fig. 1 zeigt in einer schematischen Draufsicht einen vorschlagsgemäßen Duschbodenaufbau 1 gemäß einer ersten Ausführungsform.

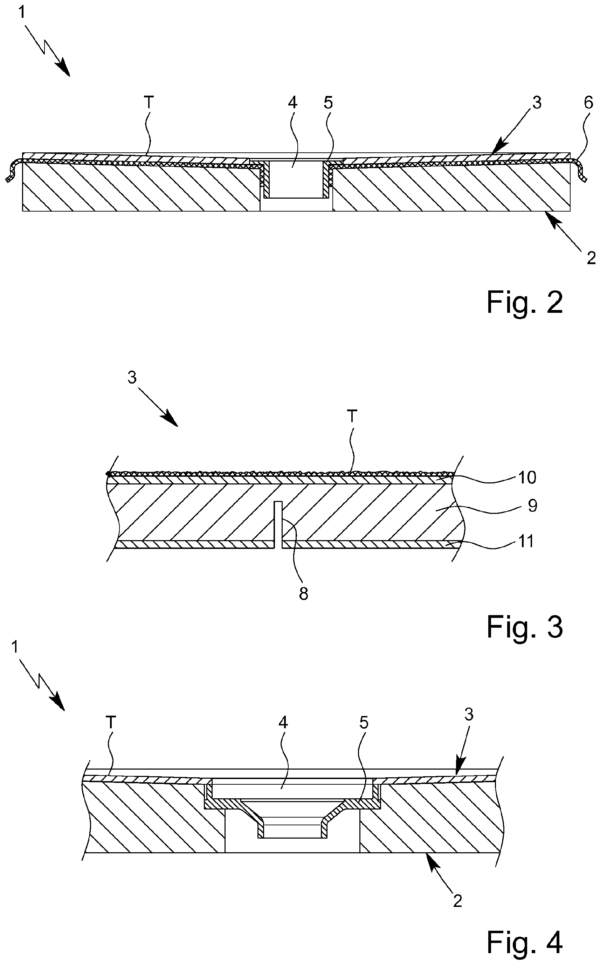

Fig. 2 zeigt den Duschbodenaufbau 1 in einem schematischen Schnitt entlang der Schnittlinie II - II gemäß Fig. 1.

Der Duschbodenaufbau 1 ist vorzugsweise als Duschtasse ausgebildet und/oder dazu ausgebildet, einen Boden bzw. eine Trittfläche T einer Dusche bzw. Duschkabine (nicht dargestellt) zu bilden.

Insbesondere ist der Duschbodenaufbau 1 dazu ausgebildet, Wasser vorzugsweise bodenseitig aufzufangen bzw. zu sammeln und/oder gesammelt abzuführen.

Der Duschbodenaufbau 1 ist vorzugsweise zumindest im Wesentlichen ebenerdig einbaubar. Insbesondere ermöglicht der Duschbodenaufbau 1 einen zumindest im Wesentlichen ebenerdigen Einstieg in eine Dusche bzw. Duschkabine.

Der Duschbodenaufbau 1 weist vorzugsweise einen Träger 2 und einen vorschlagsgemäßen Duschboden 3 auf, vorzugsweise wobei der Duschboden 3 auf dem Träger 2 angeordnet ist und/oder der Träger 2 den Duschboden 3 im Einbauzustand bodenseitig trägt bzw. abstützt. Der Aufbau des Trägers 2 und des Duschbodens 3 wird im Folgenden noch näher erläutert.

Insbesondere bildet der Duschboden 3 die Trittfläche T oder weist diese auf.

Der Duschbodenaufbau 1, insbesondere der Träger 2 und/oder der Duschboden 3, ist bzw. sind zumindest im Wesentlichen rechteckig, insbesondere quadratisch, oder kreisförmig und/oder weist bzw. weisen eine zumindest im Wesentlichen rechteckige, insbesondere quadratische, oder kreisförmige Kontur auf.

Der Duschbodenaufbau 1 weist vorzugsweise eine Ablauföffnung 4 auf, vorzugsweise wobei die Ablauföffnung 4 mittig auf der Trittfläche T angeordnet ist. Jedoch sind auch andere Lösungen möglich, insbesondere bei denen die Ablauföffnung 4 seitlich bzw. in einem Randbereich des Duschbodenaufbaus 1 bzw. der Trittfläche T angeordnet ist.

Vorzugsweise weist der Duschbodenaufbau 1 einen Ablauf 5, insbesondere einen Ablaufeinsatz bzw. eine Ablaufgarnitur, beispielsweise einen Siphon bzw. mit einem Siphon, auf, vorzugsweise wobei der Ablauf 5 in die Ablauföffnung 4 eingesetzt oder einsetzbar bzw. eingeschraubt oder einschraubbar ist.
Insbesondere ist die Ablauföffnung 4 dazu ausgebildet, den Ablauf 5 vollständig aufzunehmen, vorzugsweise derart, dass der Ablauf 5 in oder unterhalb der Trittfläche T liegt. Hier sind jedoch auch andere Lösungen möglich.

Besonders bevorzugt ist der Ablauf 5 zumindest teilweise, vorzugsweise vollständig, in den Träger 2 und/oder Duschboden 3 eingelassen oder einlassbar bzw. versenkt oder versenkbar, wie im Folgenden noch näher erläutert wird.

Die Ablauföffnung 4 bzw. der Ablauf 5 ist vorzugsweise dazu ausgebildet, Wasser abzuführen, zu sammeln und/oder einer nicht dargestellten Leitung bzw. einem nicht dargestellten Siphon zu zuführen.

Vorzugsweise ist der Duschbodenaufbau 1, insbesondere der Träger 2 bzw. der Duschboden 3 bzw. die Trittfläche T, zumindest abschnittsweise zur Ablauföffnung 4 bzw. zum Ablauf 5 hin geneigt, vorzugsweise um mehr als 1° oder 1,5°, besonders bevorzugt um mehr als 2°, und/oder weniger als 5° oder 4°, besonders bevorzugt weniger als 3° oder 2,5°, insbesondere um auf der Trittfläche T gesammeltes Wasser zur Ablauföffnung 4 bzw. zum Ablauf 5 zu leiten.

Der Träger 2 ist vorzugsweise als flächiges, insbesondere plattenförmiges, Bauteil ausgebildet.

Vorzugsweise ist der Träger 2 unmittelbar bzw. direkt mit einem Boden bzw. Untergrund (nicht dargestellt) verbunden oder verbindbar.

Vorzugsweise ist der Träger 2 aus Kunststoff, besonders bevorzugt Schaumstoff, insbesondere Polystyrol, hergestellt. Hier sind jedoch auch andere Lösungen möglich, insbesondere bei denen der Träger 2 aus Metall hergestellt ist.

Vorzugsweise ist der Träger 2 einstückig ausgebildet und/oder bildet der Träger 2 eine Baueinheit. Hier sind jedoch auch andere Lösungen möglich, beispielsweise bei denen der Träger 2 mehrschichtig ausgebildet ist.

Der Träger 2 ist vorzugsweise mehr als 1 cm oder 3 cm, insbesondere mehr als 4 cm oder 5 cm, und/oder weniger als 20 cm oder 15 cm, besonders bevorzugt weniger als 10 cm oder 8 cm, dick.

Vorzugsweise ist der Duschboden 3 mehr als 1 mm oder 1,5 mm, besonders bevorzugt mehr als 2 mm oder 2,5 mm, und/oder weniger als 10 mm oder 8 mm, insbesondere weniger als 7 mm oder 6 mm, dick.

Insbesondere ist der Träger 2 dicker als der Duschboden 3, vorzugsweise um mehr als das Doppelte oder Dreifache.

Der Träger 2 weist vorzugsweise eine Dichte von mehr als 20 kg/m³ oder 30 kg/m³, besonders bevorzugt mehr als 50 kg/m³ oder 80 kg/m³, insbesondere mehr als 100 kg/m³, und/oder weniger als 500 kg/m³ oder 300 kg/m³, besonders bevorzugt weniger als 250 kg/m³ oder 200 kg/m³, auf.

Vorzugsweise ist der Träger 2 derart belastbar, dass der Träger 2 verstärkungsfrei bzw. tragschichtfrei den Duschboden 3 tragen kann.

Der Duschboden 3 ist vorzugsweise flächig, insbesondere plattenförmig, ausgebildet.

Der Duschboden 3 ist vorzugsweise aus einem Verbundwerkstoff, insbesondere aus einem Schichtverbundwerkstoff bzw. Laminat, hergestellt und/oder mehrschichtig aufgebaut.

Vorzugsweise ist der Duschboden 3 als eine Baueinheit, insbesondere als ein hochfestes und/oder zumindest abschnittsweise starres Bauteil, bzw. einstückig ausgebildet.

Der Duschboden 3 weist vorzugsweise einen Elastizitätsmodul von mehr als 50.000 N/mm² oder 60.000 N/mm², und/oder weniger als 200.000 N/mm² oder 150.000 N/mm², insbesondere weniger als 100.000 N/mm², auf.

Vorzugsweise beträgt die Biegesteifigkeit des Duschbodens 3 mehr als 300 kNcm²/m oder 500 kNcm²/m und/oder weniger als 5.000 kNcm²/m oder 4.000 kNcm²/m.

Vorzugsweise ist der Duschboden 3 stoffschlüssig, insbesondere durch Verkleben, mit dem Träger 2 verbunden, vorzugsweise werkseitig. Hier sind jedoch auch andere Lösungen möglich, insbesondere bei denen der Duschboden 3 vor Ort mit dem Träger 2 stoffschlüssig verbunden, insbesondere verklebt, wird.

Vorzugsweise weist der Duschbodenaufbau 1 - zumindest randseitig bzw. im Randbereich - eine insbesondere flächige Dichtung 6, wie eine wasserundurchlässige Folie, auf, vorzugsweise wobei die Dichtung 6 zwischen dem Träger 2 und dem Duschboden 3 angeordnet und/oder vollflächig mit dem Träger 2 und dem Duschboden 3 verbunden ist.

Besonders bevorzugt ist die Dichtung 6 sowohl mit dem Träger 2 als auch mit dem Duschboden 3 stoffschlüssig verbunden, insbesondere verklebt, vorzugsweise vollflächig.

Die Dichtung 6 ist vorzugsweise dazu ausgebildet, den Duschbodenaufbau 1 bzw. Duschboden 3 bodenseitig abzudichten, vorzugsweise derart, dass der Träger 2 nicht in direkten Kontakt mit Wasser gerät.

Vorzugsweise steht die Dichtung 6 seitlich über den Träger 2 und/oder den Duschboden 3, wie in Fig. 1 dargestellt, über, vorzugsweise derart, dass die Dichtung 6 seitlich bzw. im Randbereich mit Fliesen o.dgl. überdeckt werden kann.

Vorzugsweise erstreckt sich die Dichtung 6 bis in die Ablauföffnung 4 bzw. ragt die Dichtung 6 in die Ablauföffnung 4 hinein, vorzugsweise derart, dass die Ablauföffnung 4 bzw. der Ablauf 5 seitlich bzw. im Randbereich abgedichtet ist. Hier sind jedoch auch andere Lösungen möglich, insbesondere bei denen die Dichtung 6 ausschließlich in einem Randbereich des Trägers 2 und des Duschbodens 3 angeordnet ist.

Wie eingangs bereits erwähnt, ist der Duschboden 3 bzw. die Trittfläche T zumindest abschnittsweise zur Ablauföffnung 4 hin geneigt oder neigbar.

Vorzugsweise ist der Duschboden 3 an die, vorzugsweise zur Ablauföffnung 4 hin geneigte, Oberfläche bzw. das Gefälle des Trägers 2 angepasst oder anpassbar.

Wie in Fig. 1 durch Strichlinien dargestellt, ist der Duschboden 3 vorzugsweise segmentartig aufgebaut und/oder durch mehrere, vorzugsweise plattenförmige und/oder zumindest im Wesentlichen ebene, Segmente bzw. Platten 7 gebildet.

Im Darstellungsbeispiel weist der Duschboden 3 vier Segmente bzw. Platten 7 auf. Hier sind jedoch auch andere Lösungen möglich, bei denen der Duschboden 3 mehr als vier Segmente bzw. Platten 7 aufweist.

Vorzugsweise sind die Segmente 7 relativ zueinander bewegbar bzw. verkippbar.

Insbesondere ist der Duschboden 3 innen bzw. im Bereich der Ablauföffnung 4 eindrückbar bzw. ist durch den Duschboden 3 bzw. dessen Segmente 7 eine Mulde bzw. eine konkave Trittfläche T bildbar.

Vorzugsweise ist der Duschboden 3, insbesondere auf der Unterseite bzw. einer dem Träger 2 zugewandten Seite, - vorzugsweise diagonal - eingefräst bzw. eingeschnitten bzw. weist der Duschboden 3, insbesondere auf der Unterseite bzw. einer dem Träger 2 zugewandten Seite, mehrere, hier vier, längliche Vertiefungen bzw. Fugen 8 auf, vorzugsweise wobei die Vertiefungen bzw. Fugen 8 von außen nach innen bzw. zur Ablauföffnung 4 hin verlaufen und/oder wobei die Vertiefungen bzw. Fugen 8 in einer gedachten Verlängerung in der Ablauföffnung 4 aufeinandertreffen.

Vorzugsweise ist der Duschboden 3 durch die Vertiefungen bzw. Fugen 8 in die Segmente 7 unterteilt.

Insbesondere sind die Segmente 7 durch die Vertiefungen bzw. Fugen 8 voneinander getrennt und/oder mittels der Vertiefungen bzw. Fugen 8 nach innen bzw. in Richtung der Ablauföffnung 4 hin verkippbar, vorzugsweise derart, dass der Duschbodenaufbau 1, insbesondere die Trittfläche T, mehrere, hier vier, nach innen bzw. zur Ablauföffnung 4 geneigte, vorzugsweise zumindest im Wesentlichen ebene, Schrägen aufweist.

Vorzugsweise beträgt die Tiefe der Vertiefungen 8 mehr als 0,1 mm oder 0,2 mm, insbesondere mehr als 0,4 mm oder 0,6 mm, und/oder weniger als 2 mm oder 1,5 mm, insbesondere weniger als 1 mm oder 0,9 mm.

Vorzugsweise sind die Vertiefungen 8 derart tief bzw. ist der Duschboden 3 in den Vertiefungen 8 derart dünn, dass der Duschboden 3 in den Vertiefungen 8 bzw. mittels der Vertiefungen 8 abschnittsweise verbogen bzw. zur Ablauföffnung 4 hin geneigt bzw. an das Gefälle des Trägers 2 angepasst werden kann.

Bei einer alternativen Ausführungsform (nicht dargestellt) sind die Segmente 7 mittels länglicher, vorzugsweise flexibler, Verbindungselemente miteinander verbunden, vorzugsweise derart, dass der Duschboden 3 mittels der Verbindungselemente abschnittsweise verbogen bzw. zur Ablauföffnung 4 geneigt werden kann.

Wie eingangs bereits erwähnt, ist der Duschboden 3 vorzugsweise mehrschichtig ausgebildet.

Fig. 3 zeigt in einem schematischen Schnitt den bevorzugten mehrschichtigen Aufbau des Duschbodens 3.

Vorzugsweise weist der Duschboden 3 eine erste Schicht 9 und eine zweite Schicht 10 auf, vorzugsweise wobei die erste Schicht 9 im Einbauzustand - insbesondere unmittelbar - unterhalb der zweiten Schicht 10 angeordnet ist und/oder die zweite Schicht 10 die Oberseite des Duschbodens 3 bzw. die Trittfläche T aufweist oder bildet.

Vorzugsweise ist die erste Schicht 9 aus Kunststoff, insbesondere Polyethylen oder Polyurethan, hergestellt.

Vorzugsweise ist die ersten Schicht 9 dicker als die zweite Schicht 10, insbesondere um mehr als das Doppelte oder Dreifache.

Vorzugsweise weist die erste Schicht 9 eine Dicke von mehr als 1 mm, insbesondere mehr als 1,5 mm oder 2 mm, und/oder weniger als 10 mm, insbesondere weniger als 8 mm oder 6 mm, auf.

Vorzugsweise weist die zweite Schicht 10 eine Dicke von mehr als 0,1 mm oder 0,2 mm und/oder weniger als 1 mm oder 0,5 mm auf.

Vorzugsweise ist die zweite Schicht 10 aus Metall, insbesondere Aluminium, hergestellt und/oder als Metallschicht, insbesondere Aluminiumdeckschicht, ausgebildet.

Vorzugsweise ist die erste Schicht 9 stoffschlüssig mit der zweiten Schicht 10 verbunden, insbesondere durch Verkleben und/oder ein thermisches Fügeverfahren.

Vorzugsweise sind die Vertiefungen 8 in die ersten Schicht 9 eingebracht bzw. weist die erste Schicht 9 die Vertiefungen 8 auf, vorzugsweise wobei die Tiefe der Vertiefungen 8 kleiner als die Dicke der ersten Schicht 9 ist. Es sind jedoch auch Lösungen möglich, bei denen sich die Vertiefungen 8 bis zur zweiten Schicht 10 erstrecken und/oder die Vertiefungen 8 jeweils eine Fuge der ersten Schicht 9 bilden.

Wie in Fig. 3 angedeutet, ist der Duschboden 3, insbesondere die zweite Schicht 10, zumindest auf der Oberseite bzw. duschraumseitig oberflächenbehandelt, vorzugsweise bedruckt und/oder lackiert, insbesondere strukturlackiert, und/oder aufgeraut bzw. rutschhemmend ausgebildet. In vorteilhafter Weise wird so die Beständigkeit des Duschbodenaufbaus 1 bzw. Duschbodens 3 erhöht bzw. eine sichere Benutzung des Duschbodens 1 gewährleistet.

Besonders bevorzugt ist der Duschboden 3, vorzugsweise die zweite Schicht 10, auf der Oberseite bzw. duschraumseitig rillenartig, noppenartig und/oder gespreckelt ausgebildet und/oder derart bedruckt und/oder lackiert, insbesondere strukturlackiert, dass Rillen, Noppen und/oder Sprenkel ausgebildet sind.

Insbesondere weist der Duschboden 3, vorzugsweise die zweite Schicht 10, auf der Oberseite bzw. duschraumseitig Rillen, Noppen und/oder Sprenkel bzw. rillenartige, noppenartige und/oder gesprenkelte Erhöhungen auf.

Vorzugsweise weist der Duschboden 3, insbesondere die zweite Schicht 10, auf der Oberseite bzw. duschraumseitig eine Rauheit von mehr als 1 µm oder 10 µm, besonders bevorzugt mehr als 20 µm oder 50 µm, insbesondere mehr als 100 µm oder 200 µm, und/oder weniger als 1000 µm oder 800 µm, besonders bevorzugt weniger als 600 µm oder 500 µm, auf, vorzugsweise wobei die Rauheit die mittlere bzw. arithmetisch gemittelte Rauheit Rₐ gemäß DIN EN ISO 4287:2010 ist.

Optional weist der Duschboden 3 eine dritte Schicht 11 auf, vorzugsweise wobei die dritte Schicht 11 grundsätzlich wie die zweite Schicht 10 aufgebaut ist und/oder ein, mehrere oder alle Merkmale der zweiten Schicht 10 aufweist. Insbesondere ist die dritte Schicht 11 aus Metall, insbesondere Aluminium, hergestellt.

Bei einer derartigen Ausführungsform sind die Vertiefungen 8 vorzugsweise sowohl in die erste Schicht 9 als auch in die dritte Schicht 11 eingebracht und/oder erstrecken sich die Vertiefungen 8 durch die dritte Schicht 11 bis zur oder in die erste Schicht 9 oder durch die erste Schicht 9 hindurch.

Vorzugsweise ist die erste Schicht 9 zwischen der zweiten Schicht 10 und der dritten Schicht 11 angeordnet und/oder ist die dritte Schicht - insbesondere unmittelbar - unterhalb der ersten Schicht 9 und/oder - insbesondere unmittelbar - oberhalb des Trägers 2 angeordnet.

Ganz besonders bevorzugt ist die dritte Schicht 11 mit dem Träger 2 bzw. der Dichtung 6 stoffschlüssig verbunden bzw. verklebt.

Fig. 4 zeigt den Duschbodenaufbau 1 gemäß einer zweiten, besonders bevorzugten Ausführungsform, vorzugsweise wobei der Duschbodenaufbau 1 gemäß der zweiten Ausführungsform grundsätzlich wie der Duschbodenaufbau 1 gemäß der ersten Ausführungsform ausgebildet bzw. aufgebaut ist und/oder mehrere oder alle Merkmale des Duschbodenaufbaus 1 gemäß der ersten Ausführungsform aufweist oder umgekehrt.

Wie bereits erläutert, ist der Ablauf 5 vorzugsweise im Träger 2 und/oder Duschboden 3 eingelassen oder einlassbar bzw. versenkt oder versenkbar.

Vorzugsweise weist der Träger 2 eine entsprechende Aufnahme bzw. Vertiefung für den Ablauf 5 auf, vorzugsweise wobei der Ablauf 5 in die Aufnahme bzw. Vertiefung eingesetzt oder einsetzbar bzw. versenkt oder versenkbar ist, insbesondere derart, dass der Ablauf 5 unterhalb der Trittfläche T und/oder des Duschbodens 3 angeordnet ist und/oder nicht über die Trittfläche T und/oder den Duschboden 3 hinausragt.

Ganz besonders bevorzugt überdeckt bzw. überlappt der Duschboden 3 den Ablauf 5, zumindest teilweise bzw. randseitig bzw. einen - hier vorzugsweise nach oben ragenden oder rohrförmigen - Randbereich des Ablaufs 5, vorzugsweise derart, dass Duschwasser vom Duschboden 3 unmittelbar in den Ablauf 5 fließen kann. In vorteilhafter Weise kann so eine Dichtung zwischen dem Duschboden 3 und Ablauf 5 entfallen bzw. wird eine Abdichtung dazwischen (nicht dargestellt) vereinfacht und/oder wird die Verletzungsgefahr beim Duschen, beispielsweise durch Fugen o.dgl., verringert.
Durch die Konstruktionsweise des Duschbodenaufbaus 1, insbesondere des Duschbodens 3, wird eine besonders stabile und/oder kompakte Bauweise und/oder eine besonders hohe Korrosionsbeständigkeit und/oder Biegesteifigkeit ermöglicht.

Die erfindungsgemäße Verwendung sieht vor, einen Verbundwerkstoff, insbesondere einen Schichtverbundwerkstoff, vorzugsweise mit einer ersten Schicht 9 aus Kunststoff und einer zweiten Schicht 10 aus Metall, als Duschboden 3 einzusetzen.

Vorzugsweise wird dazu der Duschboden 3 auf einen Träger 2 aus Kunststoff, insbesondere Schaumstoff, besonders bevorzugt Polystyrol, geklebt.

Optional wird zwischen dem Duschboden 3 und dem Träger 2 - zumindest randseitig bzw. in einem Randbereich des Duschbodens 3 und Trägers 3 - eine vorzugsweise flächige Dichtung 6, insbesondere eine wasserundurchlässige Folie, angeordnet.

Einzelne Aspekte und Merkmale der vorliegenden Erfindung können unabhängig voneinander, aber auch in beliebiger Kombination realisiert werden.

### Bezugszeichenliste:

- 1: Duschbodenaufbau
- 2: Träger
- 3: Duschboden
- 4: Ablauföffnung
- 5: Ablauf
- 6: Dichtung
- 7: Segmente
- 8: Fugen
- 9: erste Schicht
- 10: zweite Schicht
- 11: dritte Schicht

- T: Trittfläche

## Patentansprüche

1. Duschbodenaufbau (1) mit einem Träger (2) und einem auf dem Träger (2) angeordneten Duschboden (3),
wobei der Träger (2) aus Schaumstoff hergestellt ist,
wobei der Duschboden (3) stoffschlüssig mit dem Träger (2) verbunden ist,
wobei der Duschboden (3) eine werkseitig vormontierte Baueinheit bildet, und
wobei der Duschboden (3) eine Trittfläche (T) bildet und auf der Oberseite bzw. duschraumseitig strukturlackiert und/oder rutschhemmend ausgebildet ist,
**dadurch gekennzeichnet,**
**dass** der Duschboden (3) eine erste Schicht (9) aus Kunststoff und eine zweite Schicht (10) aus Metall aufweist, wobei die zweite Schicht (10) die Oberseite bzw. Trittfläche (T) des Duschbodens (3) bildet.

2. Duschbodenaufbau nach Anspruch 1, **dadurch gekennzeichnet, dass** die zweite Schicht (10) aus Aluminium hergestellt ist.

3. Duschbodenaufbau nach einem der voranstehenden Ansprüche, **dadurch gekennzeichnet, dass** der Duschboden (3) eine erste Schicht (9) aus Kunststoff und eine zweite und dritte Schicht (10, 11) aus Metall aufweist, wobei die erste Schicht (9) zwischen der zweiten und dritten Schicht (10, 11) angeordnet ist.

4. Duschbodenaufbau nach einem der voranstehenden Ansprüche, **dadurch gekennzeichnet, dass** die erste Schicht (9) aus Polyethylen oder Polyurethan und/oder die zweite und/oder dritte Schicht (10, 11) aus Aluminium hergestellt ist.

5. Duschbodenaufbau nach einem der voranstehenden Ansprüche, **dadurch gekennzeichnet, dass** der Duschbodenaufbau (1) einen Ablauf (5) aufweist, wobei der Ablauf (5) in den Träger (2) eingelassen bzw. versenkt ist und/oder der Duschboden (3) den Ablauf (5) zumindest randseitig überdeckt.

6. Duschbodenaufbau nach Anspruch 5, **dadurch gekennzeichnet, dass** der Duschbodenaufbau (1), insbesondere der Träger (2) bzw. dessen Oberseite und/oder der Duschboden (3), zumindest abschnittsweise zur Ablauföffnung (4) bzw. zum Ablauf (5) hin geneigt ist.

7. Duschbodenaufbau nach einem der voranstehenden Ansprüche, **dadurch gekennzeichnet, dass** zwischen dem Träger (2) und dem Duschboden (3) - zumindest randseitig - eine insbesondere flächige Dichtung (6), insbesondere eine wasserundurchlässige Folie, angeordnet ist, vorzugsweise wobei die Dichtung (6) sowohl mit dem Träger (2) als auch mit dem Duschboden (3) stoffschlüssig verbunden bzw. verklebt ist.

8. Duschbodenaufbau nach Anspruch 7, **dadurch gekennzeichnet, dass** insbesondere wobei die Dichtung (6) seitlich über den Träger (2) und/oder den Duschboden (3) übersteht und/oder in die Ablauföffnung (4) hineinragt.

9. Duschbodenaufbau nach einem der voranstehenden Ansprüche, **dadurch gekennzeichnet, dass** der Duschboden (3) - vorzugsweise mittig - eine Ablauföffnung (4) aufweist.

10. Duschbodenaufbau nach Anspruch 9, **dadurch gekennzeichnet, dass** der Duschboden (3) zumindest abschnittsweise zur Ablauföffnung (4) hin geneigt oder neigbar ist.

11. Duschbodenaufbau nach Anspruch 9 oder 10, **dadurch gekennzeichnet, dass** der Duschboden (3) auf der Unterseite mindestens eine längliche Vertiefung bzw. Fuge (8) und/oder mehrere Segmente (7) aufweist, um den Duschboden (3) zumindest abschnittsweise zu verformen, zu einer Ablauföffnung (4) hin zu neigen, eine konkave Trittfläche (T) zu bilden und/oder an den Träger (2) anzupassen.

12. Duschbodenaufbau nach einem der vorhergehenden Ansprüche, **dadurch gekennzeichnet, dass** der Duschboden (3) mit dem Träger (2) verklebt ist.

13. Duschbodenaufbau nach einem der voranstehenden Ansprüche, **dadurch gekennzeichnet, dass** der Duschboden (3) auf der Oberseite eine mittlere bzw. arithmetisch gemittelte Rauheit (Rₐ) von mehr als 20 µm aufweist.

14. Duschbodenaufbau nach einem der voranstehenden Ansprüche, **dadurch gekennzeichnet, dass** der Duschboden (3) ein Elastizitätsmodul von mehr als 50.000 N/mm² und/oder weniger als 200.000 N/mm² aufweist.

15. Verwendung eines Duschbodenaufbaus (1) gemäß einem der voranstehenden Ansprüche zur Bildung einer Trittfläche (T) einer Dusche oder Duschkabine.

## Claims

1. Shower floor construction (1) with a carrier (2) and a shower floor (3) arranged on the carrier (2),
wherein the carrier (2) is manufactured from foam,
wherein the shower floor (3) is substance-bonded to the carrier (2),
wherein the shower floor (3) forms a factory pre-assembled unit, and
wherein the shower floor (3) forms a tread surface (T) and is designed on the top side and/or on the shower room side with a textured lacquer and/or anti-slip coating,
**characterized in**
**that** the shower floor (3) comprises a first layer (9) of plastic and a second layer (10) of metal, wherein the second layer (10) forms the top side and/or tread surface (T) of the shower floor (3).

2. Shower floor construction according to claim 1, **characterized in that** the second layer (10) is manufactured from aluminum.

3. Shower floor construction according to one of the above claims, **characterized in that** the shower floor (3) comprises a first layer (9) of plastic and a second and third layer (10, 11) of metal, wherein the first layer (9) is arranged between the second and third layer (10, 11).

4. Shower floor construction according to one of the above claims, **characterized in that** the first layer (9) is made of polyethylene or polyurethane and/or the second and/or third layer (10, 11) is manufactured from aluminum.

5. Shower floor construction according to one of the above claims, **characterized in that** the shower floor construction (1) comprises a drain (5), wherein the drain (5) is embedded and/or sunk into the carrier (2) and/or the shower floor (3) covers the drain (5) at least at the edges.

6. Shower floor construction according to claim 5, **characterized in that** the shower floor construction (1), in particular the carrier (2) and/or its top side and/or the shower floor (3), is inclined at least in sections towards the drain opening (4) and/or towards the drain (5).

7. Shower floor construction according to one of the above claims, **characterized in that** an in particular flat seal (6), in particular a water-impermeable film, is arranged - at least at the edges - between the carrier (2) and the shower floor (3), preferably wherein the seal (6) is substance-bonded and/or glued both to the carrier (2) and to the shower floor (3).

8. Shower floor construction according to claim 7, **characterized in that** in particular wherein the seal (6) projects laterally beyond the carrier (2) and/or the shower floor (3) and/or projects into the drain opening (4).

9. Shower floor construction according to one of the above claims, **characterized in that** the shower floor (3) comprises - preferably centrally - a drain opening (4).

10. Shower floor construction according to claim 9, **characterized in that** the shower floor (3) is inclined or inclinable at least in sections towards the drain opening (4).

11. Shower floor construction according to claim 9 or 10, **characterized in that** the shower floor (3) comprises at least one elongated recess and/or joint (8) and/or several segments (7) on the lower side in order to deform the shower floor (3) at least in sections, to it towards a drain opening (4), to form a concave tread (T) and/or to adapt it to the carrier (2).

12. Shower floor construction according to one of the above claims, **characterized in that** the shower floor (3) is glued to the carrier (2).

13. Shower floor construction according to one of the above claims, **characterized in that** the shower floor (3) comprises on the top side an average and/or arithmetically averaged roughness (Rₐ) of more than 20 µm.

14. Shower floor construction according to one of the above claims, **characterized in that** the shower floor (3) comprises a modulus of elasticity of more than 50,000 N/mm² and/or less than 200,000 N/mm².

15. Use of a shower floor construction (1) according to one of the above claims to form a tread (T) of a shower or shower cubicle.

## Revendications

1. Construction de plancher de douche (1) comprenant un support (2) et un plancher de douche (3) disposé sur le support (2),
dans laquelle le support (2) est fabriqué en mousse plastique,
dans laquelle le plancher de douche (3) est relié au support (2) par une liaison matérielle,
dans laquelle le plancheur de douche (3) forme une unité pré-assemblée en usine, et
dans laquelle le plancher de la douche (3) forme une surface de marche (T) et est texturé, laqué et/ou antidérapant sur la face supérieure ou côté salle de douche,
**caractérisée en ce**
**que** le plancher de douche (3) comporte une première couche (9) en matière plastique et une deuxième couche (10) en métal, la deuxième couche (10) formant la face supérieure et/ou surface de marche (T) du plancher de douche (3).

2. Construction du plancher de douche selon la revendication 1, **caractérisée en ce que** la deuxième couche (10) est fabriquée en aluminium.

3. Construction de plancher de douche selon l'une des revendications précédentes, **caractérisée en ce que** le plancher de douche (3) comprend une première couche (9) de plastique et une deuxième et une troisième couche (10, 11) de métal, la première couche (9) étant disposée entre la deuxième et la troisième couche (10, 11).

4. Construction de plancher de douche selon l'une des revendications précédentes, **caractérisée en ce que** la première couche (9) est fabriquée en polyéthylène ou en polyuréthane et/ou la deuxième et/ou la troisième couche (10, 11) est fabriquée en aluminium.

5. Construction de plancher de douche selon l'une des revendications précédentes, **caractérisée en ce que** la construction de plancher de douche (1) comporte un drain (5), le drain (5) étant encastré et/ou enfoncé dans le support (2) et/ou le plancher de douche (3) recouvrant le drain (5) au moins sur les bords.

6. Construction de plancher de douche selon la revendication 5, **caractérisée en ce que** la construction de plancher de douche (1), en particulier le support (2) et/ou sa face supérieure et/ou le plancher de douche (3), est inclinée au moins par sections vers l'ouverture du drain (4) et/ou vers le drain (5).

7. Construction de plancher de douche selon l'une des revendications précédentes, **caractérisée en ce qu'**entre le support (2) et le plancher de douche (3) est disposé - au moins sur les bords - un joint (6) en particulier plat, en particulier un film imperméable à l'eau, de préférence le joint (6) étant relié et/ou collé à la fois au support (2) et au plancher de douche (3) d'une manière matériellement intégrale.

8. Construction de plancher de douche selon la revendication 7, **caractérisée en ce que** le joint (6) dépasse latéralement du support (2) et/ou du plancher de douche (3) et/ou pénètre dans l'ouverture du drain (4).

9. Construction de plancher de douche selon l'une des revendications précédentes, **caractérisée en ce que** le plancher de la douche (3) - de préférence au centre - possède une ouverture du drain (4).

10. Construction de plancher de douche selon la revendication 9, **caractérisée en ce que** le plancher de la douche (3) est incliné ou inclinable au moins par sections vers l'ouverture du drain (4).

11. Construction de plancher de douche selon la revendication 9 ou 10, **caractérisée en ce que** le plancher de douche (3) comporte au moins un évidement et/ou une fugue allongée (8) et/ou plusieurs segments (7) sur la face inférieure afin de déformer le plancher de douche (3) au moins par sections, de le faire basculer vers une ouverture du drain (4), de former une surface de marche (T) concave et/ou de l'adapter au support (2).

12. Construction de plancher de douche selon l'une des revendications précédentes, **caractérisée en ce que** le plancher de douche (3) est collé au support (2).

13. Construction de plancher de douche selon l'une des revendications précédentes, **caractérisée en ce que** le plancher de douche (3) présente sur la face supérieure une rugosité (Ra) moyenne ou arithmétiquement moyenne de plus de 20 µm.

14. Construction de plancher de douche selon l'une des revendications précédentes, **caractérisée en ce que** le plancher de douche (3) présente un module d'élasticité supérieur à 50 000 N/mm² et/ou inférieur à 200 000 N/mm².

15. Utilisation d'une construction de plancher de douche (1) selon l'une des revendications précédentes pour former une surface de marche (T) d'une douche ou d'une cabine de douche.
